# EUROPÄISCHE PATENTSCHRIFT

(11) **EP 3 819 511 B1**
(45) Veröffentlichungstag und Bekanntmachung des Hinweises auf die Patenterteilung: **11.10.2023**
(21) Anmeldenummer: 20206376.4
(22) Anmeldetag: 09.11.2020
(51) Int. Cl.: F16C 19/38, F16C 33/78, F16C 43/04

(54) **WÄLZLAGERANORDNUNG**
ROLLER BEARING ARRANGEMENT
AGENCEMENT DE PALIER À ROULEMENT

(30) Priorität: 11.11.2019 DE 102019217381
(43) Veröffentlichungstag der Anmeldung: 12.05.2021
(73) Patentinhaber: Aktiebolaget SKF, 415 50 Göteborg (SE)
(72) Erfinder: Kroeger, Jan, 25337 Elmshorn (DE); Lemper, Peter, 29456 Hitzacker (DE); Liesegang, Hans-Jürgen, 26419 Schortens (DE); Schulz, Klaus-Dieter, 29479 Jameln (DE)
(74) Vertreter: Kuhstrebe, Jochen

(56) Entgegenhaltungen:
- EP-A1- 2 863 083
- EP-A1- 2 940 329
- DE-A1-102010 044 173
- DE-A1-102013 200 356
- DE-B3-102017 107 005
- US-A- 3 396 975

## Beschreibung

Vorliegende Erfindung betrifft eine Wälzlageranordnung, insbesondere ein zweireihiges Kegelrollenlager gemäß dem Oberbegriff vom Patentanspruch 1, wobei die Wälzlageranordnung einen Durchmesser von mehr als einem Meter aufweist.

Wälzlageranordnungen mit großen Durchmessern werden insbesondere in der Schwerindustrie verwendet und zeichnen sich dadurch aus, dass sie einen Durchmesser von mindestens einem Meter und mehr haben, und deshalb auch als Großwälzlager bezeichnet werden. Großwälzlager sind also deutlich größer als solche, die üblicherweise in Alltagsanwendungen, wie beispielsweise bei Pkws, eingesetzt werden. Dementsprechend ist bei der Konstruktion der Großwälzlager auch eine Hochskalierung von kleinen Lagern auf große Lager nicht möglich, da andere Kriterien, wie beispielsweise Gewicht, der für die Herstellung erforderliche Materialeinsatz, der Montageaufwand und Reparaturmöglichkeiten etc., eine deutlich größere Rolle spielen.

Aus dem Stand der Technik ist beispielsweise bereits bekannt, die Lagerringe aus mehreren Segmenten zusammenzusetzen, wodurch eine Reparatur des Lagers möglich ist, ohne beispielsweise die von dem Lager getragene Welle zu demontieren. Insbesondere problematisch ist bei derartigen Großwälzlagern jedoch ihr Eigengewicht. Es wurde deshalb im Stand der Technik, insbesondere der DE 102009014923A1 bereits vorgeschlagen, den Au-βenring axial zu verkleinern, um so Material einzusparen und das Gesamtgewicht zu reduzieren. Dafür ist jedoch nötig, die Abdichtungssituation der Lagerringe bzw. des Lagerinnenraums neu auszugestalten. Es wurde deshalb in dieser Druckschrift bereits vorgeschlagen, axial an den Stirnflächen des Außenrings sogenannte Dichtungsträger zu befestigen, die einen Radialwellendichtring tragen, der wiederum an einer Radialfläche des Innenrings anliegt. Ein weiterer Dichtungsträger aus einem faserverstärkten Kunststoff ist aus der EP 2 863 083 A1 bekannt.

Üblicherweise werden für die Befestigung derartiger Dichtungsträger eine Vielzahl von Schrauben verwendet, um die Dichtungsträgerringe an den Außenringen sicher zu verschrauben. Dieser Montageaufwand und auch die Herstellung der Ringe sind deshalb sehr zeit- und kostenintensiv. Zwar wurde im Stand der Technik vorgeschlagen, die Dichtungsträger ebenfalls aus Teilsegmenten zu fertigen und die Montage dadurch zu vereinfachen, dafür ist jedoch nötig, spezielle Befestigungsstrukturen an den Dichtungsträgern und den Außenringen auszubilden, um eine drehfeste und sichere Befestigung der Dichtungsträger an den Außenringen auch ohne Schrauben zu ermöglichen. So wird vorgeschlagen, an den Dichtungsträgern Hinterschneidungen auszubilden, die in entsprechende komplementäre, am Außenring ausgebildete Hinterschneidungen eingreifen können. Dadurch wird eine leichtere Befestigung ermöglicht. Diese Ausgestaltung erfordert jedoch eine zusätzliche Bearbeitung von Dichtungsträger und Außenring, was wiederum ebenfalls sehr kosten- und zeitintensiv ist.

Es ist deshalb Aufgabe vorliegender Erfindung, einen Dichtungsträger bereitzustellen, der kostengünstig und zeitsparend hergestellt und leicht an der Wälzlageranordnung befestigbar ist.

Diese Aufgabe wird durch eine Wälzlageranordnung, insbesondere ein zweireihiges Kegelrollenlager, ermöglicht.

Im Folgenden wird eine Wälzlageranordnung mit einem ersten Lagerring und einem zweiten Lagerring vorgestellt, die zwischen sich einen Lagerinnenraum bilden, in dem Wälzkörper angeordnet sind, um eine relative Verdrehung von ersten und zweiten Lagerringen zu ermöglichen. Eine derartige Wälzlageranordnung kann insbesondere ein zweireihiges Kegelrollenlager sein. Des Weiteren ist eine derartige Wälzlageranordnung insbesondere für die Schwerindustrie einsetzbar, wobei der erste und/oder der zweite Lagerring einen Durchmesser von mehr als einem Meter aufweisen. Des Weiteren weist die Wälzlageranordnung eine Dichtanordnung zum Abdichten des Lagerinnenraums auf, wobei die Dichtanordnung einen Dichtungsträger, der drehfest mit dem ersten Lagerring verbunden ist, und ein Dichtungselement, das drehfest mit dem Dichtungsträger verbunden ist, aufweist.

Um das Gesamtgewicht der Wälzlageranordnung und die Herstellungskosten und den Herstellungszeitaufwand zu reduzieren, wird vorgeschlagen, den Dichtungsträger aus einem faserverstärkten Kunststoff herzustellen. Dabei kommt insbesondere ein glasfaserverstärkter Kunststoff (GFK) zum Einsatz. Ein derartiger Kunststoff ist besonders maßhaltig und weist eine vergleichbar große, wenn nicht größere Stabilität als das üblicherweise verwendete Blechmaterial auf.

Um gerade bei Großwälzlagern die nötige Stabilität und Maßhaltigkeit zu erreichen, wird der Dichtungsträger jedoch nicht wie üblich aus Lagen gefertigt, sondern wird aus einer Faser-Matrix-Verbund-Platte formgepresst (SMC-Verfahren). Eine Nachbearbeitung des Dichtungsträgers ist nicht nötig. Dadurch kann zum einen der Herstellungsprozess beschleunigt werden und zum anderen können Fehler, die durch fehlerhafte Laminierung des faserverstärkten Kunststoffs entstehen können, vermieden werden. Darüber hinaus kann mithilfe der formgepressten Faser-Matrix-Verbund-Platten eine große Formgenauigkeit erreicht werden, sodass auch andere Dichtkonzepte, die beispielsweise eine rein axiale Abdichtung statt dem Einsatz eines Radialwellendichtrings möglich werden.

So ist beispielsweise weiterhin eine Wälzlageranordnung bevorzugt, bei der der Dichtungsträger ein Dichtungselement trägt, das eine primäre und eine sekundäre Dichtlippe aufweist, die jeweils axial an einer Stirnfläche des zweiten Lagerrings anlaufen. Dabei bestimmt insbesondere der Abstand zwischen dem Dichtungsträger und der Stirnseite des zweiten Lagerrings die Anpresskraft der Dichtlippen an der Stirnseite des zweiten Lagerrings. Da der Dichtungsträger mithilfe des faserverstärkten Kunststoffs besonders maßhaltig und genau gefertigt werden kann, wird ermöglicht, dass der axiale Abstand zwischen Stirnseite des zweiten Lagerrings und Dichtungsträger genau eingestellt werden kann, sodass sichergestellt ist, dass die axial anliegenden Dichtlippen eine ausreichende Anpresskraft haben, um in jeder Betriebssituation des Lagers sicherzustellen, dass der Lagerinnenraum gegenüber einer Außenseite abgedichtet ist.

Des Weiteren ermöglicht die Ausgestaltung des Dichtungsträgers aus einem faserverstärkten Kunststoff, insbesondere aus GFK, dass Strukturen, wie beispielsweise Fettzuführungsbohrungen, Endoskopierbohrungen und Entlüftungsbohrungen direkt während der Herstellung eingebracht werden können. Dies wird insbesondere bei formgepressten Faser-Matrix-Verbund-Platten pass- und formgenau ermöglicht.

Des Weiteren ist möglich, direkt im Herstellungsprozess des Dichtungsträgers weitere Elemente, wie beispielsweise eine Befestigungsnut für die Aufnahme des Dichtungselements auszubilden.

Gemäß einem weiteren vorteilhaften Ausführungsbeispiel kann der Dichtungsträger mehrteilig ausgebildet sein. Um eine besonders gute Anbindung und eine axiale, radiale und/oder umfängliche Ausrichtung der Dichtungsträgersegmente zu erreichen, weisen die Dichtungsträgersegmente an ihren Anbindungsflächen zueinander komplementäre Strukturen auf, die eine eineindeutige Anordnung und Verbindung der Dichtungsträgersegmente ermöglichen. Auch diese komplementären Strukturen können direkt während des Herstellungsprozesses des Dichtungsträgers beim Formpressen mit eingebracht werden.

Dabei ist insbesondere bevorzugt, dass die Struktur einen radialen und/oder axialen Anschlag umfasst, sodass die Dichtungsträgersegmente radial und axial aufeinander ausgerichtet werden können.

Um das Dichtungselement an dem Dichtungsträger zu befestigen, wird weiterhin vorgeschlagen, einen Spannring zu verwenden, der dazu ausgelegt ist, das Dichtungselement zwischen Dichtungsträger und Spannelement axial einzuklemmen und dadurch gegen ein Verdrehen zu sichern. Neben einem Verklemmen kann das Dichtungselement alternativ oder zusätzlich auch mittels Kraftschluss, insbesondere mittels eines weiteren Befestigungselements (z.B. Schrauben), an Spannring und/oder Dichtungsträger befestigt werden. Ebenfalls ist möglich, dass das Dichtungselement und der Spannring und der Dichtungsträger formschlüssig miteinander wechselwirkende Strukturen aufweisen, die ebenfalls eine Befestigung des Dichtungselements an den Dichtungsträger mithilfe des Spannrings ermöglichen. Zusätzlich oder alternativ kann das Dichtungselement auch stoffschlüssig an dem Dichtungsträger und/oder dem Spannring befestigt sein, wobei insbesondere ein Kleben bevorzugt ist. Selbstverständlich sind andere oder zusätzliche Befestigungsmöglichkeiten des Dichtungselements an dem Dichtungsträger bzw. dem Spannring gleichermaßen möglich und vom Rahmen der Anmeldung mit umfasst.

Das Dichtungselement selbst kann vorzugsweise einen Dichtungskörper aufweisen, der sowohl die primäre als auch die sekundäre Dichtlippe trägt, sodass das Dichtungselement als einstückiges Element ausgebildet ist. Es sind jedoch auch andere Ausgestaltungen möglich, bei denen primäre und sekundäre Dichtlippen von unterschiedlichen Dichtungskörpern getragen werden. Die einstückige Ausbildung hat den Vorteil, dass nur ein Dichtungselement an dem Dichtungsträger befestigt werden muss, was wiederum die Herstellung und Montage vereinfacht.

Neben dem Abstand zwischen Dichtungsträger und Stirnfläche bestimmen auch eine Länge der Dichtlippe, ein Anstellwinkel der Dichtlippe bezüglich der Stirnfläche, ein Material der Dichtlippe und/oder eine geometrische Ausgestaltung der Dichtlippe, die Anlagekraft der Dichtlippe, insbesondere der primären Dichtlippe, an der Stirnfläche des Lagerrings. So ist bevorzugt, dass die primäre und die sekundäre Dichtlippe einen Lippenspreizwinkel zwischen sich bilden, der im Bereich von 100° bis 140°, vorzugsweise bei ungefähr 120° liegt, wobei die primäre und die sekundäre Dichtlippe derart ausgerichtet sind, dass die primäre Dichtlippe in Richtung des Lagerinnenraums und die sekundäre Dichtlippe in die entgegengesetzte Richtung gerichtet ist. Dadurch kann eine optimierte Dichtlippenanlage an der Stirnfläche des zweiten Lagerrings auch bei axialer Ausrichtung erreicht werden.

Weiterhin ist bevorzugt, das Dichtungselement aus Nitrilbutadienkautschuk bzw. hydriertem Acrylnitrilbutadienkautschuk herzustellen. Diese Materialien haben eine höhere Resistenz gegen Ozon und ermöglichen eine Einsetzbarkeit auch bei extrem tiefen Temperaturen.

Weitere Vorteile und vorteilhafte Ausführungsformen sind in der Beschreibung, den Zeichnungen und den Ansprüchen angegeben. Dabei sind insbesondere die in der Beschreibung und in den Zeichnungen angegebenen Kombinationen der Merkmale rein exemplarisch, so dass die Merkmale auch einzeln oder anders kombiniert vorliegen können.

Im Folgenden soll die Erfindung anhand von in den Zeichnungen dargestellten Ausführungsbeispielen näher beschrieben werden. Dabei sind die Ausführungsbeispiele und die in den Ausführungsbeispielen gezeigten Kombinationen rein exemplarisch und sollen nicht den Schutzbereich der Erfindung festlegen. Dieser wird allein durch die anhängigen Ansprüche definiert.

Es zeigen:
- Fig. 1:: eine schematische perspektivische Teilansicht einer Wälzlageranordnung gemäß einem ersten Ausführungsbeispiel;
- Fig. 2:: eine schematische Schnittansicht der Wälzlageranordnung der Fig. 1;
- Fig. 3:: eine schematische perspektivische Detailansicht des in Fig. 1 und Fig. 2 verwendeten Dichtungselements;
- Fig. 4:: eine schematische Detailansicht eines in der Wälzlageranordnung verwendeten Dichtungsträgers;
- Fig. 5:: eine schematische Detailansicht eines alternativ verwendbaren Dichtungselements;
- Fig. 6:: eine schematische Detailansicht eines alternativ verwendbaren Dichtungselements; und
- Fig. 7:: eine schematische Detailansicht eines alternativ verwendbaren Dichtungselements.

Im Folgenden werden gleiche oder funktionell gleichwirkende Elemente mit denselben Bezugszeichen gekennzeichnet.

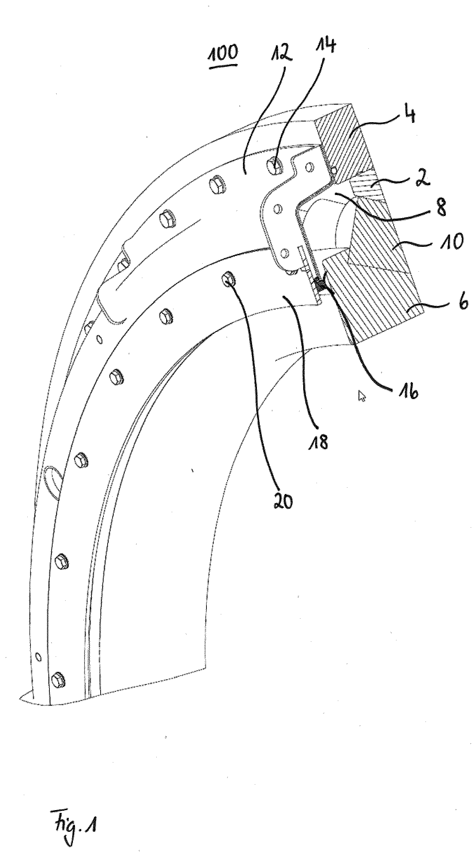

Fig. 1zeigt schematisch eine perspektivische Teilansicht einer Wälzlageranordnung 100 mit einem Außenring 2, der drehfest mit einer Welle 4 verbunden ist, und einem Innenring 6, wobei Außenring 2 und Innenring 6 zwischen sich einen Lagerinnenraum 8 ausbilden, in dem Wälzkörper 10 angeordnet sind.

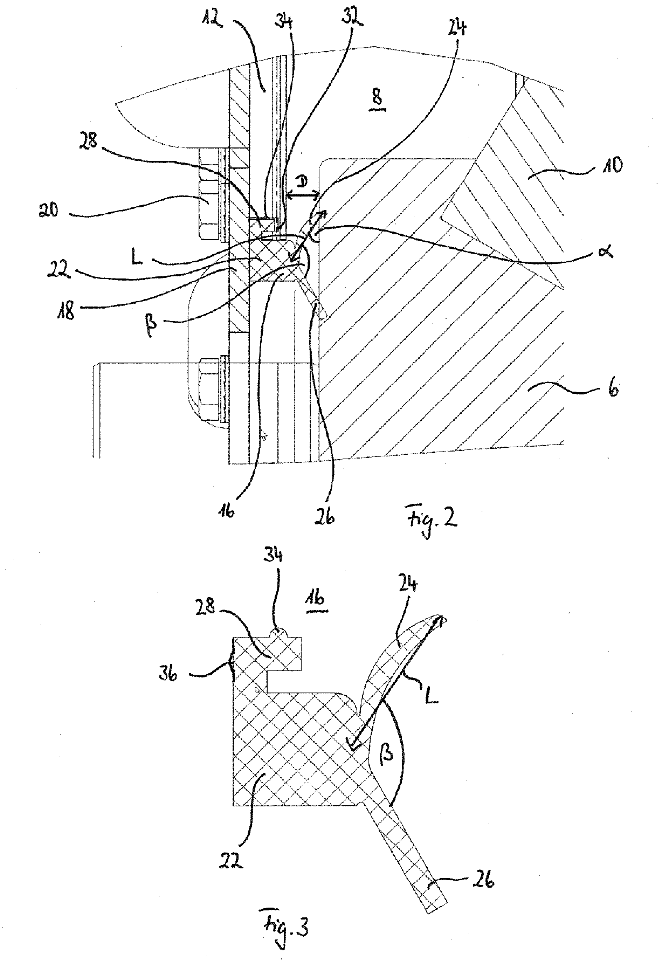

Um den Lagerrinnenraum 8 vor einer Kontamination durch Schmutz, Wasser oder allgemein Partikel zu schützen, und um ein optional in den Lagerinnenraum 8 befindliches Schmiermittel in dem Lagerinnenraum 8 zu halten, muss der Lagerinnenraum 8 nach au-βen hin abgedichtet sein. Dazu wird üblicherweise an dem Außenring 2 oder der Welle 4 ein Dichtungsträger 12 angebracht, der in dem in Fig. 1 gezeigten Ausführungsbeispiels mittels Schrauben 14 befestigt wird und den Lagerinnenraum 8 zumindest teilweise abdeckt. Der Dichtungsträger 12 erstreckt sich dabei von dem Lageraußenring 2 bzw. Welle 4 zu dem Lagerring 6 und trägt eine Dichtungselement 16. Diese Ausgestaltung ist vergrö-βert auch in der Schnittansicht der Fig. 2 dargestellt, wobei Fig. 2 aber nur den Lagerinnenring 6, den Wälzkörper 10, aber nicht den Außenring 2 zeigt. Des Weiteren ist in Fig. 2 der Dichtungsträger 12 dargestellt, der ein Dichtungselement 16 trägt.

In dem in den Fig. dargestellten Ausführungsbeispielen ist das Dichtungselement 16 als axiales Dichtungselement ausgestaltet. Es ist jedoch auch möglich, das Dichtungselement als Radialwellendichtring auszubilden.

Um das Dichtungselement 16 an dem Dichtungsträger 12 drehfest zu befestigen, ist weiterhin ein Spannring 18 vorgesehen, der umfänglich wiederum mittels Schrauben 20 an dem Dichtungsträger 12 befestigt ist, so dass das Dichtungselement 16 zwischen Dichtungsträger 12 und Spannring 18 eingeklemmt ist. Das Dichtungselement selbst ist ebenfalls mittels der Schrauben 20 an dem Spannring 18 in Umfangsrichtung drehfest und in axial definiertem Abstand zu dem Lagerinnenring 6 befestigt. Auf die verschiedenen Befestigungsmöglichkeiten wird weiter unten näher eingegangen.

Wie Fig. 2 und Fig. 3 zu entnehmen sind, weist das Dichtungselement 16 einen Dichtungskörper 22 auf, der eine primäre Dichtlippe 24 und eine sekundäre Dichtlippe 26 trägt. In dem dargestellten Ausführungsbeispiel sind Dichtungskörper 22 und Dichtlippen 24, 26 einstückig ausgebildet, es ist aber auch möglich das Dichtungselemente 16 aus mehreren Teilen zu fertigen. Der Dichtungskörper 22 hat in dem gezeigten Ausführungsbeispiel eine Struktur 28, in Form einer Nase, die mit dem Dichtungsträger 12 zusammenwirkt, um den Dichtungskörper 22 und damit das Dichtungselement 16 an dem Dichtungsträger 12 axial und radial zu sichern.

Weiterhin zeigt Fig. 2, dass die primäre Dichtlippe 24 und die sekundäre Dichtlippe 26 nicht wie üblich radial ausgerichtet sind, sondern axial an einer Stirnfläche 30 des Innenrings 6 anlaufen. Dies ist insofern ungewöhnlich, da bis jetzt die Fachleute davon ausgegangen sind, dass eine axiale Dichtung bzw. eine axial anlaufende primäre Dichtung 24 keine ausreichende Anlagekraft an der Stirnfläche 30 oder einer anderen Axialfläche aufbringen könne, um den Lagerinnenraum 8 sicher und zuverlässig vor einer Kontamination von außen zu schützen und ein optional im Lagerinnenraum 8 befindliches Schmiermittel in ihm zu halten.

Es hat sich jedoch überraschenderweise herausgestellt, dass die Dichtlippe derart ausgebildet werden kann, dass sie eine ausreichende Anlagekraft auch in axialer Richtung aufbringen kann. Neben dem Abstand D zwischen Dichtungsträger 12 und Stirnseite 30 spielen dabei auch das Material des Dichtungselements und insbesondere der primären Dichtlippe, ihre Länge L1, ihr Anstellwinkel α bezüglich der Stirnfläche 30, ihre geometrische Ausgestaltung und ihr Spreizwinkel β zu der sekundären Dichtlippe 26 eine entscheidenden Rolle. Um eine besonders gute Anlagekraft zu erhalten, wird für das Dichtungselement die erreichte Anlagekraft und ihr Verhalten über die gesamte Lebensdauer des Lagers simuliert und die Parameter dementsprechend angepasst.

So zeigt beispielsweise die in Fig. 2 und vergrößert in Fig. 3 dargestellte primäre Dichtlippe 24 eine geometrische Ausgestaltung mit leicht nach außen gewölbter und in der Mitte verdickter Form und weist zu der sekundären Dichtlippe 26 einen Lippenspreizwinkel β von ungefähr 120° auf. Des Weiteren wird der Abstand D zwischen Dichtungsträger 12 und Stirnfläche 30 des Lagerinnenrings 6 derart eingestellt, dass auch bei großer Belastung und langer Lebensdauer die Dichtlippe 24 immer in Kontakt mit der Stirnfläche 30 ist. Weiterhin ist bevorzugt, dass der Anstellwinkel α der primären Dichtlippe 24 zur Stirnfläche 30 des Lagerinnenrings 6 ungefähr im Bereich zwischen 20° und 60° liegt. Weiterhin hat sich als bevorzugt herausgestellt, das Dichtungselement und insbesondere die primäre Dichtlippe 24 aus einem elastischen Material, vorzugsweise Nitrilbutadienkautschuk oder hydriertem Acrylnitrilbutadienkautschuk herzustellen. Diese Materialien haben eine ausreichende Festigkeit, hohe Elastizität und große Glätte, sodass die Dichtlippe über ihre Lebensdauer dichtend an der Stirnfläche 30 anliegt, ohne aufgrund zu hohem Reibmoment beschädigt zu werden oder die Rotation der Lagerkomponenten zu behindern. Zudem zeigen diese Materialien eine hohe Resistenz gegenüber Ozon und können auch bei tiefen Temperaturen eingesetzt werden.

Um das Dichtungselement 16 an den Dichtungsträger 12 zu befestigen, ist in dem Ausführungsbeispiel von Fig. 2 weiterhin dargestellt, dass der Dichtungsträger 12 eine Hinterschneidung 32 aufweist, die mit der Struktur 28, d.h. der Nase, des Dichtungskörpers 22 zusammenwirkt, um das Dichtungselement 16 radial und axial zu sichern. Weiterhin bildet die Hinterschneidung zusammen mit der Nase 28 eine Art Labyrinthdichtung, die den Lagerinnenraum 8 weiterhin abdichtet. Um den Lagerinnenraums 8 zusätzlich abzudichten ist, wie insbesondere auch der vergrößerten Darstellung der Dichtlippen in Fig. 3 zu entnehmen, an dem Dichtungselement 16 im Bereich der Struktur 28 eine sich radial erstreckende Auskragung 34 und im Bereich des Dichtungskörpers 22 eine sich axial erstreckende Auskragung 36 ausgebildet, für eine zusätzliche Abdichtung zwischen Dichtungselement 16 und Spannring 18 bzw. Dichtungsträger 12 sorgen. Zusätzlich kann der Dichtungskörpers 22 auch mit dem Spannring 18 und/oder dem Dichtungsträger verklebt sein.

Wie oben schon erwähnt, ist für die Festlegung der Anlagekraft der primären Dichtlippe 24 unter anderem der Abstand D zwischen dem Dichtungsträger 12 und der Stirnfläche 30 des Lagerinnenrings ausschlaggebend. Der Dichtungsträger 12 wird bei den aus dem Stand der Technik bekannten Lagern aus einem Metallblech gefertigt, das sich jedoch gerade bei Großwälzlagern leicht verbiegt, so dass bei herkömmlichen Lagern der Abstand D über den Umfang stark variiert. Diese Variation führt dazu, dass bei einer axial anlaufenden Dichtung die primäre Dichtlippe 24 nicht immer an der Stirnfläche 30 des Lagerinnenrings 6 anliegt, sondern von dieser beabstandet ist. Eine axiale Dichtungsanordnung wurde deshalb von den Fachleuten nie in Betracht gezogen.

Um die axiale Unwucht möglichst zu verringern, wird deshalb weiterhin vorgeschlagen, den Dichtungsträger 12 nicht, wie aus dem Stand der Technik bekannt, aus einem Blechmaterial, sondern aus einem faserverstärkten Kunststoff, insbesondere aus glasfaserverstärktem Kunststoff (GFK) zu fertigen. GFK hat die Eigenschaft, dass es zum einen leicht ist, wodurch das Gesamtgewicht des Großwälzlagers reduziert werden kann, zum anderen aber sehr stabil und frei von Deformationen ist, sodass auch bei großen Wälzlagern der Abstand D zwischen Dichtungsträger 12 und Stirnfläche 30 genau eingestellt und über den Umfang gleich gehalten werden kann. Dabei hat sich als vorteilhaft herausgestellt, das GFK-Material nicht, wie übliche, zu laminieren, sondern aus einer Faser-Matrix-Verbund-Platte formzupressen, was insbesondere die Maßhaltigkeit und Präzision der Fertigung erhöht.

Ein derartiger aus faserverstärktem Kunststoff, insbesondere aus GFK-Material, hergestellter Dichtungsträger 12 kann aber auch als Dichtungsträger für Radialwellendichtungen verwendet werden.

Des Weiteren kann der Dichtungsträger 12 einteilig oder mehrteilig ausgebildet sein und während des Herstellungsprozesses können weitere Strukturen, wie beispielsweise Entlüftungsbohrungen, Schmiermittelversorgungsbohrungen, Endoskopiebohrungen etc. direkt miteingeformt werden.

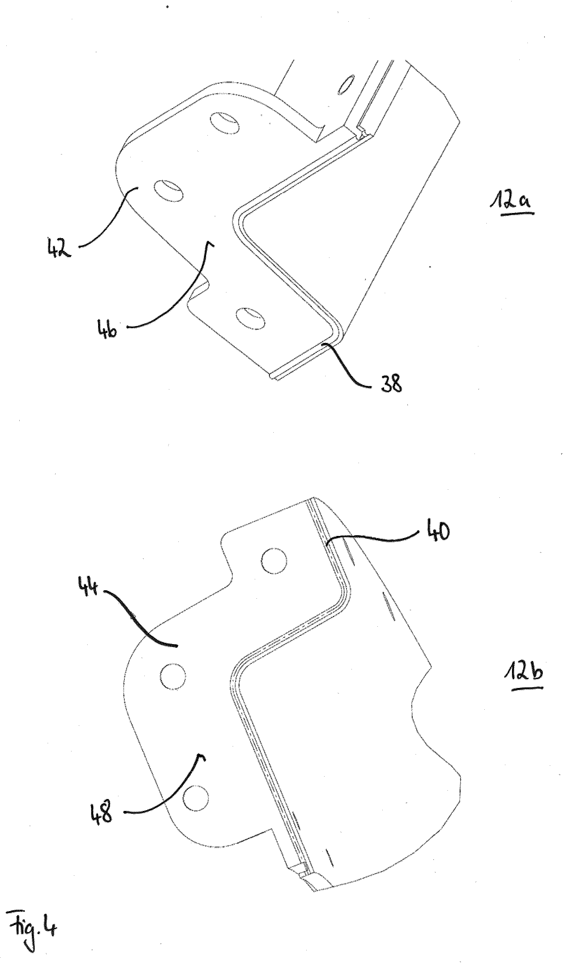

Bei einer mehrteiligen Ausführung ist es zudem vorteilhaft, dass, wie in Fig. 4 dargestellt, zwei aneinander anstoßende, benachbarte Dichtungsträgersegmentteile 12a, 12b zu einander komplementäre Strukturen 38, 40 aufweisen. In dem in Fig. 4 dargestellten Ausführungsbeispiel sind die zueinander komplementären Strukturen durch eine Auskragung 38 und eine entsprechend ausgestaltete Nut 40 realisiert, die beim Zusammenbau ineinandergreifen und die Dichtungsträgersegmente 12a, 12b radial und axial aneinander ausrichten. Weiterhin kann an den Dichtungsträgersegmenten 12a, 12b je ein Flanschelement 42, 44 angebracht sein, die beispielsweise miteinander verschraubt werden können, um die Dichtungsträgersegmente 12a, 12b miteinander zu verbinden. Zusätzlich können die Stoßflächen 46, 48 der Dichtungsträgersegmente, insbesondere die Flanschflächen, mit einem Dichtmaterial, insbesondere einer Flüssigkeitsdichtung beschichtet sein, um die Dichtigkeit des Dichtungsträgers 12 in Umfangsrichtung sicherzustellen. Die Dichtungsträgersegmente 12a, 12b können auch miteinander lediglich verklebt sein, wobei der Kleber dann sowohl die Befestigungs- als auch die Abdichtungsfunktion übernehmen kann.

Statt der dargestellten Nut-und-Feder-Verbindung ist es selbstverständlich auch möglich, andere geeignete komplementäre Strukturen auszubilden, um eine radiale, axiale und/oder umfängliche Festlegung und Ausrichtung der Dichtungsträgersegmente zueinander zu ermöglichen. Dabei ist aber besonders vorteilhaft, wenn die komplementären Strukturen zumindest einen radialen und einen axialen Anschlag aufweisen, sodass die Ausrichtung der Dichtungsträgersegmente vereinfacht ist.

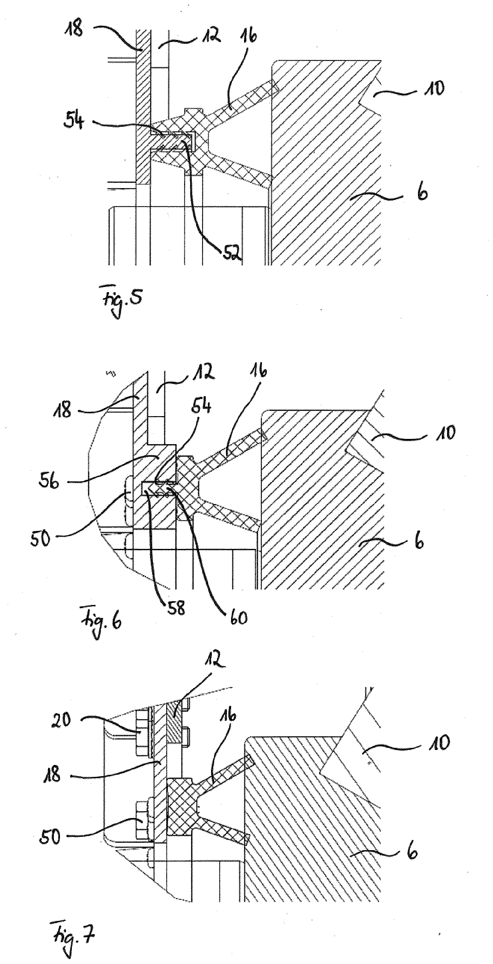

Die Figuren 5, 6 und 7 zeigen weitere alternative Befestigungsmöglichkeiten für das Dichtungselement 16 an dem Dichtungsträger 12 bzw. dem Spannelement 18. Bei den gezeigten anderen Ausführungsformen ist das Dichtungselement 16 lediglich mit dem Spannelement 18 verbunden und ist nicht direkt an dem Dichtungsträger 12 befestigt. So zeigen die Figuren 5 und 6 jeweils Ausgestaltungen, bei denen das Dichtungselement 16 und der Spannring 18 form- und reibschlüssig miteinander verbunden sind. Dabei ist in Fig. 5 eine reine form- und reibschlüssige Ausgestaltung gezeigt, während in Fig. 6 der Form- bzw.

Reibschluss durch einen Kraftschluss mit Hilfe zusätzlicher Befestigungselemente 50 ergänzt wird. In Fig. 5 weist der Spannring 18 eine Auskragung 52 auf, an der das Dichtungselement 16, das mit Widerhaken 54 ausgestattet ist, angeklemmt wird. In dem Ausgestaltungsbeispiel der Fig. 6 weist dagegen der Spannring 18 eine Verdickung 56 mit einer Nut 58 auf, in die ein Fortsatz 60 des Dichtungselements, der ebenfalls mit Widerhaken 54 ausgestattet ist, eingreift. Zusätzlich sind die Befestigungselemente 50 vorgesehen, die das Dichtungselement 16 an dem Spannring 18 drehfest befestigen. Selbstverständlich kann das Dichtungselement 16 an dem Spannring 18 auch nur mit den Schrauben 50 angeschraubt sein, wie es beispielsweise in Fig. 7 dargestellt ist.

Eine Wälzlageranordnung, wie in den Figuren 1 bis 7 beschrieben, ist insbesondere dann vorteilhaft, wenn der Innenring feststehend und der Außenring drehend ausgebildet ist, es kann aber auch bei feststehendem Außenring und drehendem Innenring eingesetzt werden. Insgesamt kann mit der vorgestellten Wälzlageranordnung eine Großwälzlageranordnung bereitgestellt werden, die bei Durchmessern über einem Meter sowohl eine Gewichtsersparnis als auch eine verbesserte Dichtleistung ermöglicht. Die Kombination aus GFK-Material, das aus einer Faserverbundplatte formgepresst ist, und der axial anlaufenden Dichtung ermöglicht eine optimierte axiale Dichtung, da durch den GFK-Dichtungsträger eine besonders genaue Einstellung des Abstands zwischen Dichtungsträger und Stirnfläche des Innenrings möglich ist.

### Bezugszeichenliste

- 100: Wälzlageranordnung
- 2: Außenring
- 4: Welle
- 6: Innenring
- 8: Lagerinnenraum
- 10: Wälzkörper
- 12: Dichtungsträger
- 14: Schrauben
- 16: Dichtungselement
- 18: Spannring
- 20: Schrauben
- 22: Dichtungskörper
- 24: primäre Dichtungslippe
- 26: sekundäre Dichtungslippe
- 28: Struktur
- 30: Stirnfläche
- 32: Hinterschneidung
- 34, 36: Dichtungsauskragung
- 38, 40: komplementäre Strukturen
- 42, 44: Flanschelement
- 46, 48: Stoßflächen
- 50: Befestigungselemente
- 52: Auskragung
- 54: Widerhaken
- 56: Verdickung
- 58: Nut
- 60: Fortsatz
- D: Abstand
- L: Länge
- α: Anstellwinkel
- β: Lippenspreizwinkel

## Patentansprüche

1. Wälzlageranordnung (100), insbesondere zweireihiges Kegelrollenlager, mit einem ersten Lagerring (2; 6) und einem zweiten Lagerring (2; 6), die zwischen sich einen Lagerinnenraum (8) bilden, in dem Wälzkörper (10) angeordnet sind, um eine relative Verdrehung von erstem und zweiten Lagerring (2; 6) zu ermöglichen, wobei die Wälzlageranordnung (100) weiterhin eine Dichtanordnung zum Abdichten des Lagerinnenraums (8) aufweist, wobei die Dichtanordnung einen Dichtungsträger (12), der drehfest mit dem ersten Lagerring (2; 6) verbunden ist, und ein Dichtungselement (16), das drehfest mit dem Dichtungsträger (12) verbunden ist, aufweist, **dadurch gekennzeichnet, dass** der Dichtungsträger (12) aus einem faserverstärkten Kunststoff hergestellt ist, wobei der Dichtungsträger (12) ein Faser-Matrix-Verbundplatten-Formpress-Dichtungsträger ist.

2. Wälzlageranordnung (100) nach Anspruch 1, wobei der Dichtungsträger (12) aus glasfaserverstärktem Kunststoff (GFK) hergestellt ist.

3. Wälzlageranordnung (100) nach einem der vorhergehenden Ansprüche, wobei der Dichtungsträger (12) mehrteilig aus mehreren aneinander anstoßenden Dichtungsträgersegmenten (12) ausgebildet ist.

4. Wälzlageranordnung (100) nach Anspruch 3, wobei die Dichtungsträgersegmente (12) an ihren Stoßflächen zueinander komplementäre Strukturen (38; 40) aufweisen, die derart ausgebildet sind, dass eine eineindeutige Anordnung und Verbindung zwischen zwei benachbarten Dichtungsträgersegmenten (12) in radialer, axialer und/oder umfänglicher Richtung sichergestellt ist.

5. Wälzlageranordnung (100) nach Anspruch 4, wobei die Struktur (38; 40) einen radialen und/oder einen axialen Anschlag umfasst.

6. Wälzlageranordnung (100) nach einem der vorhergehenden Ansprüche, wobei das Dichtungselement (16), das der Dichtungsträger (12) trägt, umfänglich mittels eines Spannrings (18) an dem Dichtungsträger (12) angebracht ist.

7. Wälzlageranordnung (100) nach einem der vorhergehenden Ansprüche, wobei das Dichtungselement (16) und/oder der Dichtungsträger (12) Strukturen (38; 40) aufweisen, um das Dichtungselement (16) drehfest an dem Dichtungsträger (12) zu befestigen.

8. Wälzlageranordnung (100) nach einem der vorhergehenden Ansprüche, wobei das Dichtungselement (16) eine primäre Dichtlippe (24) und ein sekundäre Dichtlippe (26) aufweist, wobei die primäre und die sekundäre Dichtlippe (24; 26) entweder axial an einer Stirnseite des zweiten Lagerrings (2; 6) oder radial an einer Laufbahnfläche des zweiten Lagerrings (2; 6) anliegen.

9. Wälzlageranordnung (100) nach einem der vorhergehenden Ansprüche, wobei die primäre Dichtlippe (24) mit einer vorbestimmten Anlagekraft an der Stirnfläche (30) oder der Radialfläche des zweiten Lagerrings (2; 6) anliegt.

10. Wälzlageranordnung (100) nach einem der vorhergehenden Ansprüche, wobei die Anlagekraft der primären Dichtlippe (24) über eine Länge der Dichtlippe (24), einen Anstellwinkel der Dichtlippe (24) bezüglich der Stirnfläche (30), ein Material der Dichtlippe (24), eine geometrische Ausgestaltung der Dichtlippe (24), und/oder einem definierten Abstand des Dichtungsträgers (12) zu der Stirnfläche (30) des zweiten Lagerrings (2; 6) bestimmt ist.

## Claims

1. Rolling-bearing arrangement (100), in particular two-row tapered-roller bearing, having a first bearing ring (2; 6) and a second bearing ring (2; 6) which form between them a bearing interior space (8), in which rolling bodies (10) are arranged, in order to allow relative rotation of first and second bearing rings (2; 6), wherein the rolling-bearing arrangement (100) furthermore has a sealing arrangement for sealing off the bearing interior space (8), wherein the sealing arrangement has a seal carrier (12), which is connected rotationally conjointly to the first bearing ring (2; 6), and a seal element (16), which is connected rotationally conjointly to the seal carrier (12), **characterized in that** the seal carrier (12) is produced from a fibre-reinforced plastic, wherein the seal carrier (12) is a compression-moulded fibre/matrix-composite-plate seal carrier.

2. Rolling-bearing arrangement (100) according to Claim 1, wherein the seal carrier (12) is produced from glass-fibre-reinforced plastic (GFRP).

3. Rolling-bearing arrangement (100) according to either of the preceding claims, wherein the seal carrier (12) is formed in multiple parts from multiple mutually abutting seal-carrier segments (12) .

4. Rolling-bearing arrangement (100) according to Claim 3, wherein, on their abutment surfaces, the seal-carrier segments (12) have mutually complementary structures (38; 40) which are formed in such a way that a one-to-one arrangement and connection between two adjacent seal-carrier segments (12) in a radial, axial and/or circumferential direction is ensured.

5. Rolling-bearing arrangement (100) according to Claim 4, wherein the structure (38; 40) comprises a radial and/or an axial stop.

6. Rolling-bearing arrangement (100) according to one of the preceding claims, wherein the seal element (16), which is carried by the seal carrier (12), is circumferentially attached to the seal carrier (12) by means of a clamping ring (18).

7. Rolling-bearing arrangement (100) according to one of the preceding claims, wherein the seal element (16) and/or the seal carrier (12) have/has structures (38; 40) in order for the seal element (16) to be fastened rotationally conjointly to the seal carrier (12).

8. Rolling-bearing arrangement (100) according to one of the preceding claims, wherein the seal element (16) has a primary sealing lip (24) and a secondary sealing lip (26), wherein the primary and secondary sealing lips (24; 26) either abut axially against a face side of the second bearing ring (2; 6) or abut radially against a raceway surface of the second bearing ring (2; 6).

9. Rolling-bearing arrangement (100) according to one of the preceding claims, wherein the primary sealing lip (24) abuts with a predetermined abutment force against the face surface (30) or the radial surface of the second bearing ring (2; 6).

10. Rolling-bearing arrangement (100) according to one of the preceding claims, wherein the abutment force of the primary sealing lip (24) is determined via a length of the sealing lip (24), an angle of inclination of the sealing lip (24) in relation to the face surface (30), a material of the sealing lip (24), a geometrical configuration of the sealing lip (24), and/or a defined distance of the seal carrier (12) from the face surface (30) of the second bearing ring (2; 6).

## Revendications

1. Agencement de palier à roulements (100), en particulier palier à roulements coniques sur deux rangées, comprenant une première bague de palier (2 ; 6) et une deuxième bague de palier (2 ; 6) qui forment entre elles un intérieur de palier (8) dans lequel sont disposés des éléments de roulement (10) afin de permettre une torsion relative de la première et de la deuxième bague de palier (2 ; 6), dans lequel l'agencement de palier à roulements (100) présente en outre un agencement d'étanchéité pour rendre étanche l'intérieur de palier (8), dans lequel l'agencement d'étanchéité présente un support d'étanchéité (12) qui est relié de manière verrouillée en rotation à la première bague de palier (2 ; 6), et un élément d'étanchéité (16) qui est relié de manière verrouillée en rotation au support d'étanchéité (12),
**caractérisé en ce que** le support d'étanchéité (12) est fabriqué à partir d'une matière plastique renforcée par des fibres, dans lequel le support d'étanchéité (12) est un support d'étanchéité moulé par injection pour panneaux de fibres en matrice de fibres.

2. Agencement de palier à roulements (100) selon la revendication 1, dans lequel le support d'étanchéité (12) est fabriqué à partir d'une matière plastique renforcée de fibres de verre (GFK).

3. Agencement de palier à roulements (100) selon l'une quelconque des revendications précédentes, dans lequel le support d'étanchéité (12) est réalisé en plusieurs parties à partir de plusieurs segments de support d'étanchéité (12) adjacents les uns aux autres.

4. Agencement de palier à roulements (100) selon la revendication 3, dans lequel les segments de support d'étanchéité (12) présentent au niveau de leurs surfaces d'appui des structures (38 ; 40) complémentaires les unes aux autres qui sont réalisées de façon à assurer un agencement et une liaison biunivoques entre deux segments de support d'étanchéité (12) voisins dans la direction radiale, axiale et/ou circonférentielle.

5. Agencement de palier à roulements (100) selon la revendication 4, dans lequel la structure (38 ; 40) comprend une butée radiale et/ou axiale.

6. Agencement de palier à roulements (100) selon l'une quelconque des revendications précédentes, dans lequel l'élément d'étanchéité (16) qui porte le support d'étanchéité (12) est fixé en circonférence au support d'étanchéité (12) au moyen d'une bague de serrage (18).

7. Agencement de palier à roulements (100) selon l'une quelconque des revendications précédentes, dans lequel l'élément d'étanchéité (16) et/ou le support d'étanchéité (12) présentent des structures (38 ; 40) pour fixer l'élément d'étanchéité (16) de manière verrouillée en rotation au support d'étanchéité (12).

8. Agencement de palier à roulements (100) selon l'une quelconque des revendications précédentes, dans lequel l'élément d'étanchéité (16) présente une lèvre d'étanchéité primaire (24) et une lèvre d'étanchéité secondaire (26), dans lequel la lèvre d'étanchéité primaire et la lèvre d'étanchéité secondaire (24 ; 26) sont appliquées soit axialement contre une face frontale de la deuxième bague de palier (2 ; 6), soit radialement contre un chemin de roulement de la deuxième bague de palier (2 ; 6).

9. Agencement de palier à roulements (100) selon l'une quelconque des revendications précédentes, dans lequel la lèvre d'étanchéité primaire (24) est appliquée avec une force d'application prédéterminée contre la surface frontale (30) ou la surface radiale de la deuxième bague de palier (2 ; 6).

10. Agencement de palier à roulements (100) selon l'une quelconque des revendications précédentes, dans lequel la force d'application de la lèvre d'étanchéité primaire (24) est déterminée par une longueur de la lèvre d'étanchéité (24), un angle d'attaque de la lèvre d'étanchéité (24) par rapport à la surface frontale (30), un matériau de la lèvre d'étanchéité (24), une configuration géométrique de la lèvre d'étanchéité (24) et/ou une distance définie du support d'étanchéité (12) par rapport à la surface frontale (30) de la deuxième bague de palier (2 ; 6).
